(19) Europäisches Patentamt

European Patent Office

Office européen des brevets

(11) **EP 1 684 232 A1**

(12) **EUROPEAN PATENT APPLICATION**

(43) Date of publication:
**26.07.2006 Bulletin 2006/30**

(51) Int Cl.:
***G06T 5/00*** *(2006.01)*

(21) Application number: **06000879.4**

(22) Date of filing: **17.01.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **24.01.2005 KR 2005006436**

(71) Applicant: **MEDISON CO., LTD.**
**Kangwon-do 250-870 (KR)**

(72) Inventors:
• **Kim, Cheol An**
  **Guseong-eup**
  **Yongin-si**
  **Gyeonggido 449-939 (KR)**
• **Ra, Jong Beom**
  **Yuseoung-gu**
  **Daejon 305-762 (KR)**

• **Song, Young Seuk**
  **Discusser & Medison Building**
  **Seoul 135-280 (KR)**
• **Lim, Jung Eun**
  **Jung-gu**
  **Daejon 301-824 (KR)**
• **Yang, Eun Ho**
  **Nowon-gu**
  **Seoul 139-784 (KR)**
• **Yu, Donghoon**
  **Buk-gu**
  **Gwangju 500-809 (KR)**
• **Lee, Jae Keun**
  **Gwanak-gu**
  **Seoul 151-812 (KR)**

(74) Representative: **Lorenz, Werner**
**Lorenz & Kollegen**
**Patent- und Rechtsanwaltskanzlei**
**Alte Ulmer Strasse 2-4**
**89522 Heidenheim (DE)**

(54) **Method of improving the quality of a three-dimensional ultrasound doppler image**

(57)    The present invention relates to a method of improving a 3D ultrasound color Doppler image through a post-processing. A method of processing an ultrasound image, includes the following steps: a) recognizing a target object from an inputted ultrasound image based on an object recognition algorithm using connectivity of the target object; b) setting at least one object region by using the connectivity of the recognized target object; c) calculating a structure matrix by using voxel gradients of the object region; d) calculating a diffusion matrix from the structure matrix; and e) acquiring a processed ultrasound image by applying the diffusion matrix and the voxel gradients to the inputted ultrasound image.

**Fig. 5B**

Diffusion matrix

## Description

The present invention generally relates to a method of processing an ultrasound image, and more particularly to a method of improving the quality of a three-dimensional (3D) ultrasound Doppler image by applying post-processing to an ultrasound image acquired through an ultrasound device.

The ultrasound diagnostic device has several advantages such as being convenient and ensuring safety from exposure to X-rays, etc. For this reason, the ultrasound diagnostic device is extensively utilized in various medical fields. The ultrasound diagnostic device acquires ultrasound images of organs from a target object by using the ultrasound characteristics such as reflection, scattering and absorption, which affect the ultrasound signal emitted into the organs of the target object. The scattered ultrasound signal includes information related to an acoustic impedance difference at boundaries of the organs. Furthermore, the scattered ultrasound signal includes information related to a motion speed of scatterers (organs). The intensity of scattering, which corresponds to the intensity of the ultrasound signal reflected from the target object, reflects the acoustic impedance difference. Also, a frequency shift of the ultrasound signal based on the Doppler effect reflects a motion component of the organs in the propagation direction of the ultrasound signal.

In order to display the intensity of the scattering and the frequency shift of the ultrasound signal on an ultrasound image, the intensity of the scattering and the frequency shift should be digitized. Further, the reflected ultrasound signal includes not only the information related to the intensity of the scattering and the frequency shift, but also a plurality of noises. As such, a method of improving the quality of the ultrasound image is required. Generally, a method increasing a transmission power level of the ultrasound signal or injecting a contrast agent into the blood of the target object is commonly used to obtain a high quality ultrasound image. However, since the method of increasing the transmission power level may produce a certain effect to organs or tissues of the target object, its use is limited. Also, there are problems in that the method of injecting the contrast medium may harm a blood vessel and require a long diagnostic time due to a contrast agent injection time.

It is an object of the present invention to provide a method of improving the quality of a three-dimensional (3D) ultrasound Doppler image by applying a diffusion matrix and gradients of voxels to an original ultrasound image.

In accordance with an aspect of the present invention, there is provided a method of processing an ultrasound image, which includes the steps of: a) recognizing a target object from an inputted ultrasound image based on an object recognition algorithm using connectivity of the target object; b) setting at least one object region by using the connectivity of the recognized target object; c) calculating a structure matrix by using voxel gradients of the object region; d) calculating a diffusion matrix from the structure matrix; and e) acquiring a processed ultrasound image by applying the diffusion matrix and the voxel gradients to the inputted ultrasound image.

The above and other objects and features of the present invention will become apparent from the following description of preferred embodiments given in conjunction with the accompanying drawings, in which:

Fig. 1 is a schematic diagram showing an ultrasound diagnostic system;
Fig. 2 is a flow chart showing a process of improving the quality of a 3D ultrasound Doppler image in accordance with the present invention;
Figs. 3A and 3B are photographs showing 2D and 3D ultrasound images of a kidney, respectively;
Figs. 4A and 4B are photographs showing 2D and 3D ultrasound images of a liver, respectively;
Fig. 5A is a schematic diagram illustrating an eigenvector and an eigenvalue of a structure matrix;
Fig. 5B is a schematic diagram illustrating an eigenvector and an eigenvalue of a diffusion matrix obtained from a structure matrix;
Fig. 6 is a histogram showing a relationship between frequency and voxel values;
Figs. 7A to 7D are schematic diagrams showing a process of producing a connection image of a blood vessel in a kidney;
Fig. 8 is a flow chart showing a process of producing a connection image of a blood vessel in a kidney;
Figs. 9A to 9D are schematic diagrams showing a process of producing a connection image of a blood vessel in a liver; and
Fig. 10 is a flow chart showing a process of producing a connection image of a blood vessel in a liver.

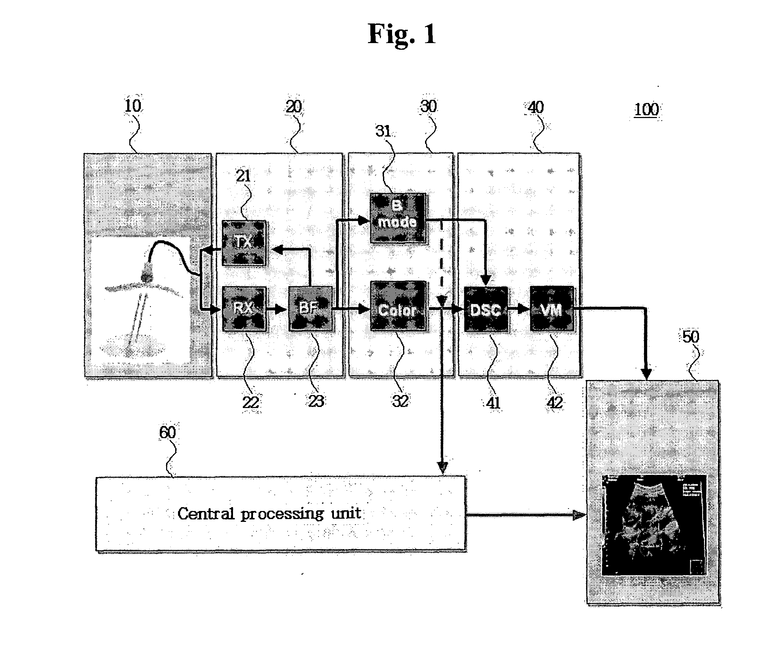

Fig. 1 is a schematic diagram showing an ultrasound diagnostic system. An ultrasound diagnostic system 100 includes an ultrasound detecting unit 10, a front-end unit 20, an image processing unit 30, a back-end unit 40 and a central processing unit 60.

The ultrasound detecting unit 10 contains an ultrasound probe. The ultrasound probe has an ultrasound transducer array consisting of a plurality of transducers.

The front-end unit 20 includes a transmitting unit 21, a receiving unit 22 and a beam forming unit 23. The transmitting unit 21 provides a transmission signal formed in beam forming unit 23 to the probe of the ultrasound detecting unit 10. The receiving unit 22 transmits an ultrasound echo signal received from the probe to the beam forming unit 23.

The image processing unit 30 includes a B-mode processing unit 31 and a color processing unit 32 for performing image processing upon a reception beam outputted from the beam forming unit 23.

The back-end unit 40 includes a digital scan converter 41 and a monitor 42. The digital scan converter 41 scan-converts an image outputted from the B-mode processing unit 31 or color processing unit 32. The monitor 42 displays the image received from the digital scan converter 41.

The central processing unit 60 controls the image processing in the B-mode processing unit 31 and color processing unit 32.

In Fig. 1, the reference numeral "50" indicates an ultrasound image displayed on the monitor 42.

The purpose and objective of the present invention is to improve the quality of a 3D ultrasound Doppler image of the blood vessel displayed from 3D color Doppler data. 3D image processing of the blood vessel, which is modeled in a cylinder shape, is carried out through using a morphological characteristic in accordance with the present invention. In such a case, the 3D color Doppler data related to the blood vessel, which are not scan converted, may be used for the 3D image processing in order to efficiently remove a noise and clearly indicate the morphological characteristics of the blood vessel such as connectivity, sharpness of boundaries and the like on the ultrasound image.

In accordance with the preferred embodiment of the present invention, the method of improving the quality of the 3D ultrasound Doppler image includes the steps of: (a) recognizing an object from an ultrasound image based on an object recognition algorithm utilizing the connectivity of the object; (b) setting an object region; (c) calculating a structure matrix on the basis of voxel gradients in the object region; (d) acquiring a diffusion matrix from the structure matrix; and (e) applying the diffusion matrix to the ultrasound image in accordance with the present invention.

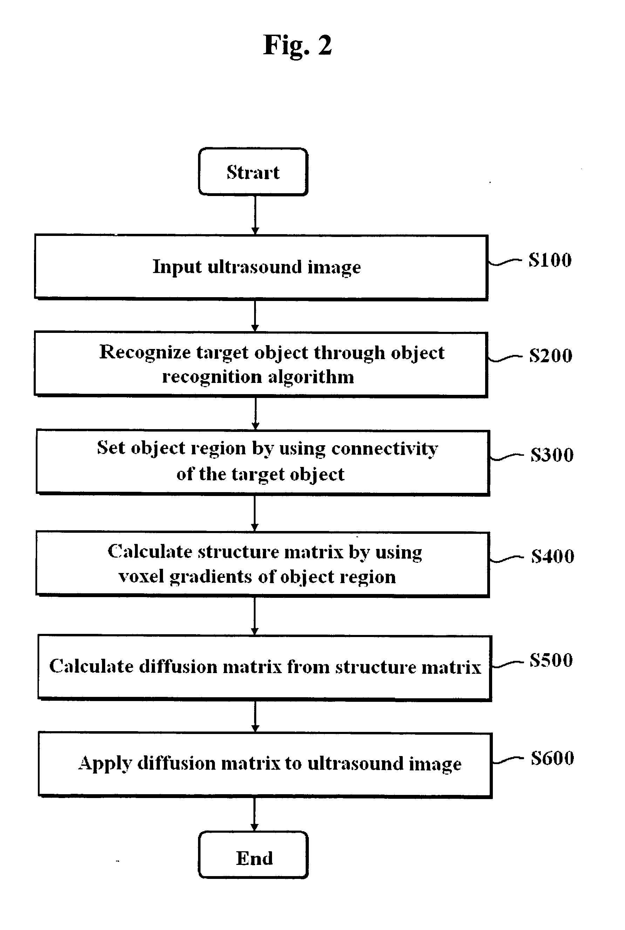

Referring now to Fig. 2, the method of improving the quality of the 3D ultrasound Doppler image will be described below in accordance with the present invention.

First, an ultrasound image, which is acquired through hardware built in an ultrasound diagnostic device, is inputted at step S100. As mentioned above, the ultrasound image corresponds to the 3D color Doppler image in which the 3D scan conversion is not carried out.

After the ultrasound image is inputted, the objects included in the inputted ultrasound image (i.e., internal organs) are recognized through the object recognition algorithm using the connectivity based on the blood vessel characteristics of objects, which are previously classified and stored in a database, at step S200.

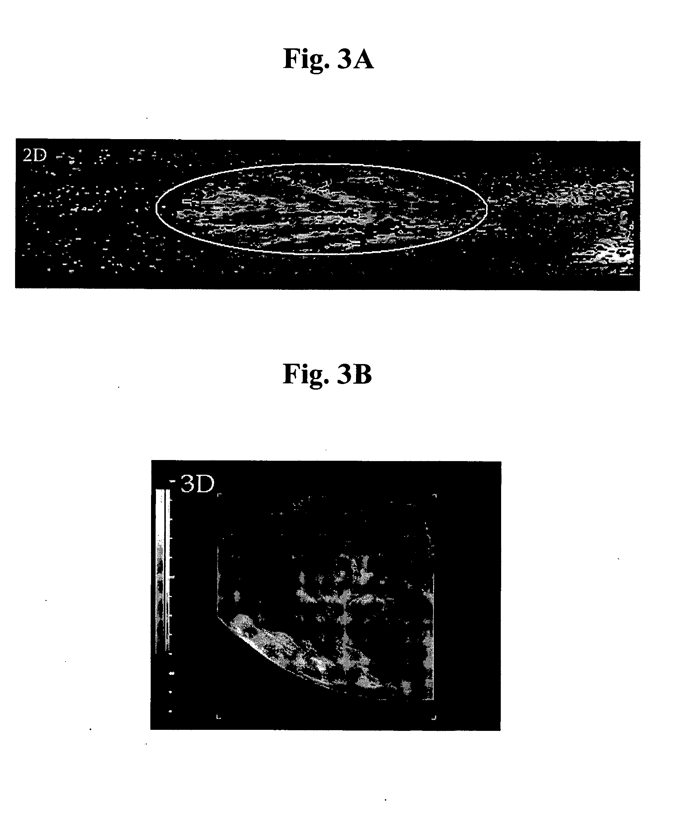

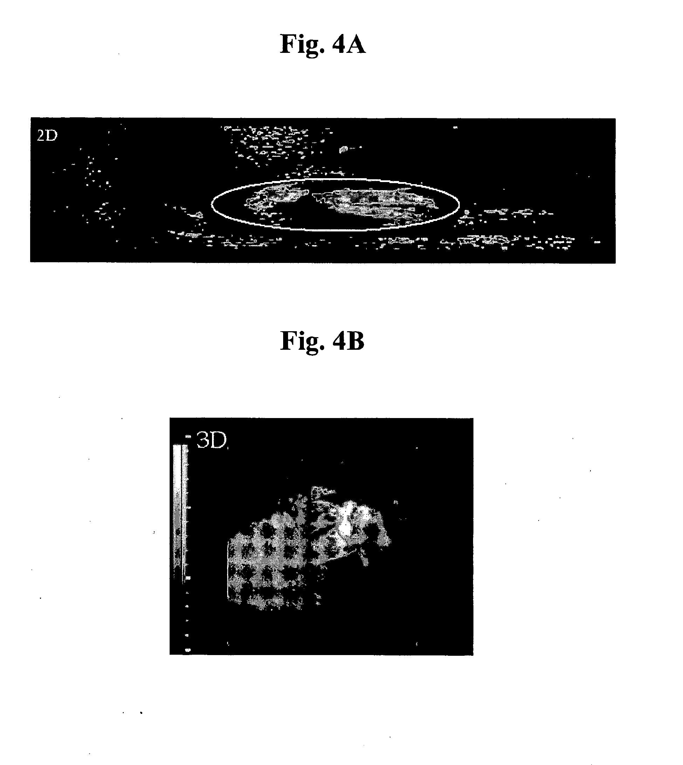

The blood vessel characteristic represents a morphological characteristic of the blood vessel, which is anatomically examined. Figs. 3A and 3B are photographs showing 2D and 3D ultrasound images of a kidney, respectively. Figs. 4A and 4B are photographs showing 2D and 3D ultrasound images of a liver, respectively. As shown in Fig. 3A and Fig. 4A, as well as Fig. 3B and Fig. 4B, the blood vessel of each organ has different morphological characteristic. For example, the kidney shown in Figs. 3A and 3B structurally has larger blood vessels and smaller blood vessels spread from the blood vessel than those of the liver shown in Figs. 4A and 4B.

Therefore, the object recognition is carried out by using a different object recognition algorithm for each target object on the basis of the morphological characteristic of each object blood vessel. The connectivity of the target object is used in the object recognition process.

The connectivity represents whether voxels are connected to each other. In the 2D image, 4-connectivity is to determine whether voxels, which are positioned at the up, down, left and right sides of a reference voxel, are connected by examining the voxels. Further, 8-connectivity is to determine whether voxels, which are positioned at the up, down, left, right, left-up, left-down, right-up and right-down sides of a reference voxel, are connected. In the 3D image, there are two types of 6-connectivity and 26-connectivity. The 26-connectivity is selected and used in accordance with the preferred embodiment of the present invention. In the 26-connectivity, 6 voxels share a face with the reference voxel and 12 voxels share an edge with the reference voxel, whereas 8 voxels share a point with the reference voxel.

As mentioned above, an appropriate object recognition algorithm using the connectivity of the object, which an operator wishes to observe, is applied in order to recognize the object. For example, if the object is the kidney, then it has characteristics in which the blood vessel is large and thick, many capillary vessels are spread from the blood vessel and the capillary vessels are connected with a low gray level. Also, the volume size of the blood vessel is relatively larger than that of the noise.

An object region is set through using the connectivity of the recognized object at step S300. The object region setting process may be individually carried out according to the characteristic of the recognized object (organ).

Thereafter, a structure matrix, which is suitable for a 3D characteristic of the blood vessel, is calculated by using the gradients of voxels consisting of the ultrasound image in which the noise is removed at step S400. The gradients of the voxels may be calculated through various methods. For example, the gradients of the voxels consisting of the blood vessel can be calculated based on the following equation:

$$I_x(x,y,z) = \frac{I(x+1,y,z) - I(x-1,y,z)}{2}$$

$$I_y(x,y,z) = \frac{I(x,y+1,z) - I(x,y-1,z)}{2}$$

Eq. (1)

$$I_z(x,y,z) = \frac{I(x,y,z+1) - I(x,y,z-1)}{2}$$

wherein $I_x$, $I_y$ and $I_z$ represent the gradients for the x-axis, y-axis and z-axis directions, respectively. The structure matrix can be represented by using the gradients $I_x$, $I_y$ and $I_z$ based on the following equation:

$$\begin{pmatrix} I_x \\ I_y \\ I_z \end{pmatrix} \begin{pmatrix} I_x & I_y & I_z \end{pmatrix} = \begin{pmatrix} I_x^2 & I_x I_y & I_x I_z \\ I_x I_y & I_y^2 & I_y I_z \\ I_x I_z & I_y I_z & I_z^2 \end{pmatrix}.$$

Eq. (2)

A filtering for the structure matrix of the ultrasound image may be carried out in order to make the structure matrix to be insensitive to the noise. That is, the filtering may be carried out for reducing the influence from the noise, even if the noise exists in the ultrasound image. For example, the noise of a high frequency component may be removed by performing a Gaussian filtering, which is a low-pass filter. The structure matrix ($J_\rho(I)$) applying the Gaussian filtering is shown by the following equation:

$$J_\rho(I) = \begin{pmatrix} K_\rho * I_x^2 & K_\rho * (I_x I_y) & K_\rho * (I_x I_z) \\ K_\rho * (I_x I_y) & K_\rho * I_y^2 & K_\rho * (I_y I_z) \\ K_\rho * (I_x I_z) & K_\rho * (I_y I_z) & K_\rho * (I_z^2) \end{pmatrix}$$

Eq. (3)

wherein * represents convolution and $K_\rho$ represents a convolution kernel. The convolution kernel $K_\rho$ is a Gaussian function represented by the following equation:

$$K_\rho(x,y,z) = \frac{1}{\sqrt{(2\pi\rho^2)^3}} \cdot \exp\left( -\frac{x^2 + y^2 + z^2}{2\rho^2} \right)$$

Eq. (4)

The structure matrix represented by equation (2) or equation (3) can be denoted through an eigenvalue decomposition as follows:

$$J(I) = \begin{pmatrix} w_1 & w_2 & w_3 \end{pmatrix} \begin{pmatrix} \mu_1 & 0 & 0 \\ 0 & \mu_2 & 0 \\ 0 & 0 & \mu_3 \end{pmatrix} \begin{pmatrix} w_1^T \\ w_2^T \\ w_3^T \end{pmatrix}$$

Eq. (5)

4

wherein eigenvectors $w_1$, $w_2$, $w_3$ and eigenvalues $\mu_1$, $\mu_2$, $\mu_3$ represent directions of the gradients of voxels and the magnitudes of the gradients, respectively. The diffusion matrix is obtained by changing the eigenvalues in the structure matrix ($J(I)$) to have a relationship of $\mu_1 \geq \mu_2 \geq \mu_3$. The diffusion matrix $( D(I))$ is denoted by the following equation:

$$D(I) = \begin{pmatrix} \omega_1 & \omega_2 & \omega_3 \end{pmatrix} \begin{pmatrix} \lambda_1 & 0 & 0 \\ 0 & \lambda_2 & 0 \\ 0 & 0 & \lambda_3 \end{pmatrix} \qquad \text{Eq. (6)}$$

wherein $\lambda_1 = \begin{cases} -\alpha, & if \quad \mu_1 \rangle s \\ \alpha & else \end{cases}$, $\lambda_2 = \begin{cases} -\alpha, & if \quad \mu_2 \rangle s \\ \alpha & else \end{cases}$ and $\lambda_3 = \begin{cases} -\alpha, & if \quad \mu_3 \rangle s \\ \alpha & else \end{cases}$. Herein,

"s" and "$\alpha$", which are determined by the operator, may be changed according to the sorts of the color Doppler volume data. If "s" is set to have a small value, then it has an effect of increasing the sharpness of the ultrasound image. On the contrary, if "s" is set to have a large value, then it has an effect of increasing the smoothness of the ultrasound image. In addition, if the eigenvalue in the diffusion matrix has a positive value, then the smoothing effect arises. Further, if the eigenvalue in the diffusion matrix has a negative value, then the sharpening effect arises.

If the eigenvector has a relatively large eigenvalue in an arbitrary voxel, then it means that the gradient of the voxel is relatively large. The voxel having a large gradient may be portrayed as a boundary between the inside and outside of the blood vessel. Therefore, the sharpening should be performed to make the boundary clear.

The reason why "$\lambda$" is determined on the basis of an absolute value of "$\mu$" is to more clearly display the walls of the blood vessel of a cylinder shape.

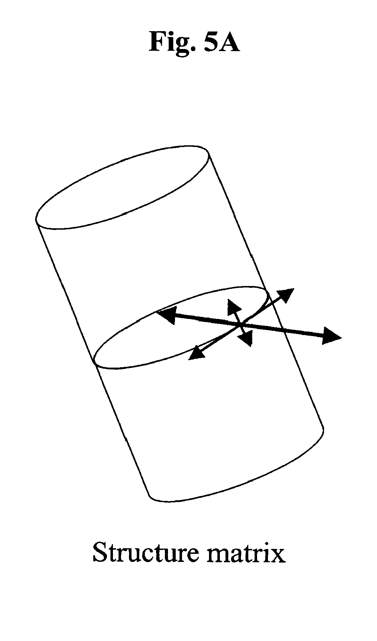

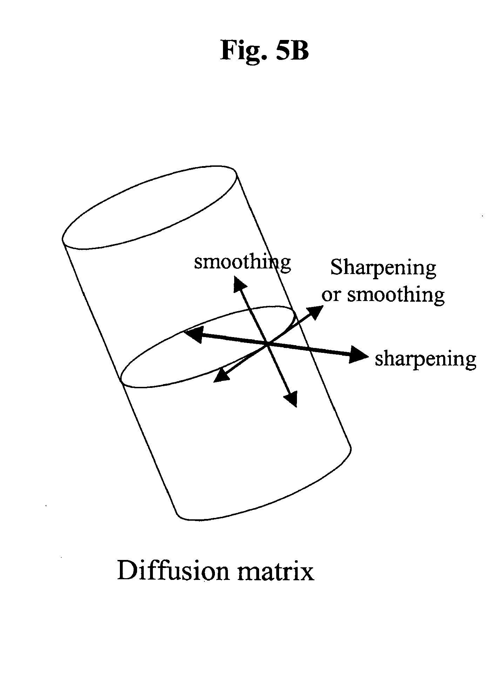

Fig. 5A is a schematic diagram showing the eigenvector and the eigenvalue of the structure matrix. Fig. 5B is a schematic diagram showing an eigenvector and an eigenvalue of the diffusion matrix obtained from the structure matrix.

Next, it is required to calculate a divergence of a vector, which is represented as a multiplication of the diffusion matrix (D) and the gradient vector, based on the following equation:

$$\frac{\partial I}{\partial t} = div \left[ D \cdot \begin{pmatrix} I_x \\ I_y \\ I_z \end{pmatrix} \right] \qquad \text{Eq. (7)}$$

wherein $\dfrac{\partial I}{\partial t}$ can be represented by a difference (It-I) between a filtered ultrasound image (It) and the original ultrasound image (I). Therefore, if the equation (7) is denoted as $\dfrac{\partial I}{\partial t} = div \begin{bmatrix} K_x \\ K_y \\ K_z \end{bmatrix}$, then the following equation (8) can be obtained.

$$It = I + \frac{\partial K_x}{\partial x} + \frac{\partial K_y}{\partial y} + \frac{\partial K_z}{\partial z} \qquad \text{Eq. (8)}$$

Finally, the quality of the ultrasound color Doppler image can be improved by applying the diffusion matrix and the gradient to the original ultrasound image can be acquired at step S600. Until a desired quality of the ultrasound image is acquired, the above process can be iteratively carried out.

Hereinafter, a method of setting the object region by using the connectivity of the recognized object will be described in detail.

The method of setting the object region is carried out through using an image segmentation method. In the image segmentation method, pixels or voxels are not shared between segmented regions, and pixels or voxels are consecutively connected in the same segmented region. The object region setting is carried out through the following 3 steps: (a) simplifying the ultrasound image by using a morphological filter; (b) selecting a marker from the simplified ultrasound image; and (c) expanding the marker to neighboring pixels (region growing). The marker, which is obtained as a result of the image segmentation method, is an aggregation of pixels or voxels representing each region. The marker is selected by using various characteristics of pixels or voxels such as brightness, gradient or motion vector.

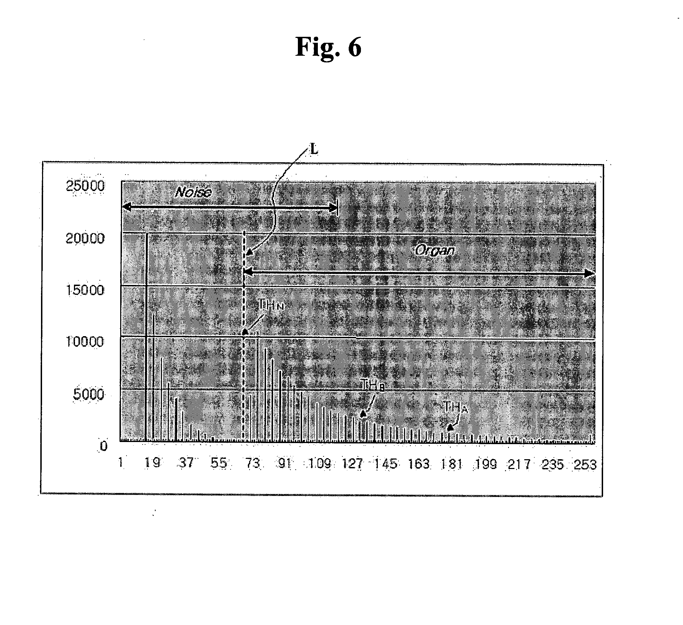

Fig. 6 is a histogram showing a relationship between the intensity of each pixel, such as a gray level, and the frequency of each pixel value. A method of setting a threshold value to remove the noise from the ultrasound image will be described in view of Fig. 6. The histogram is distributed according to the signal components as shown in Fig. 6. For example, noise components are distributed at a relatively low gray level region of the histogram while object components are distributed at a relatively high gray level region of the histogram. Therefore, a boundary L between the noise and the object can be clearly recognized. A gray level at the boundary L is set as a threshold value $TH_N$.

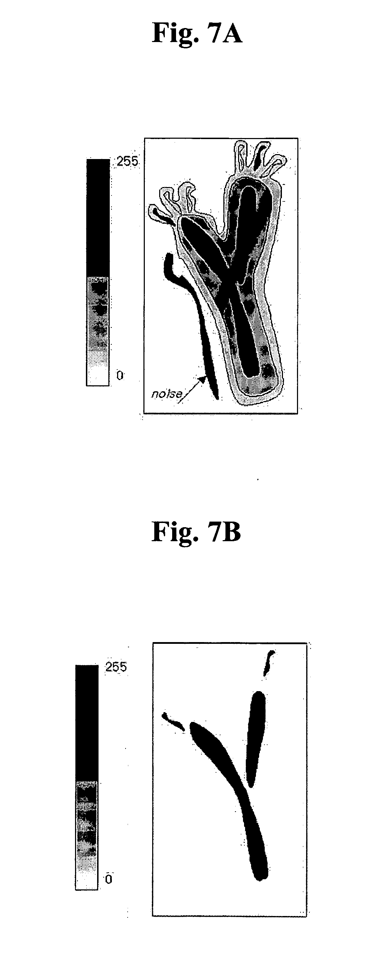

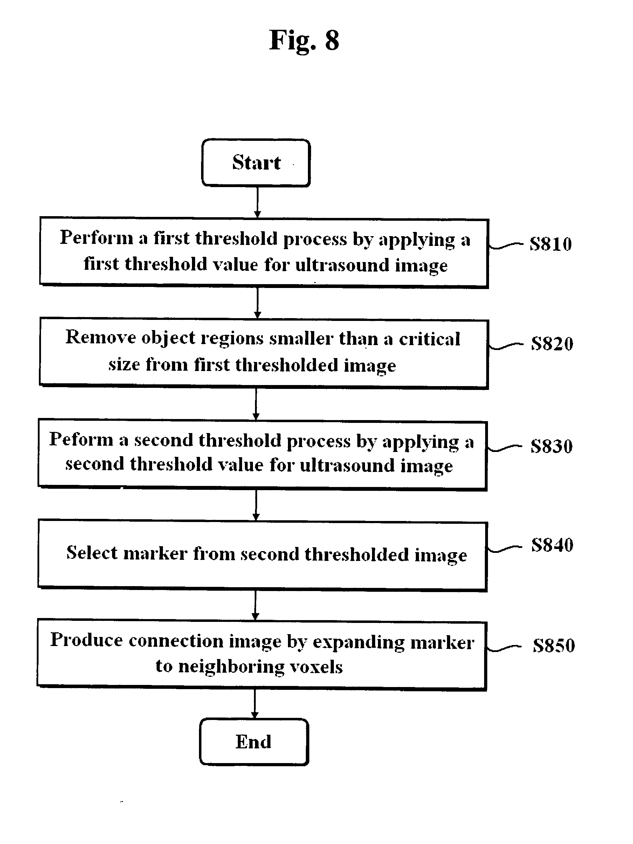

Hereinafter, a process of producing a connection image from the ultrasound image by using the connectivity of the ultrasound image will be described in detail. Figs. 7A to 7D are schematic diagrams showing a process of producing a connection image from the ultrasound image. Fig. 8 is a flow chart showing a process of producing a connection image from the ultrasound image.

A first thresholding process of applying a first threshold value $TH_a$ is carried out for an ultrasound image shown in Fig. 7A at step S810. Therefore, the signal component distributed at the region having a value less than the first threshold value $Th_a$ (i.e., noise component) is removed from the ultrasound image so that a first thresholded image can be obtained as shown in Fig. 7B. For the ultrasound image of kidney, the first thresholded image represents thick blood vessels. Since the image signal is not clearly separated from the noise, the removed noise components may include not only a noise clearly separated from the object image signal, but also an object image signal which is considered as noise. The first thresholded image may consist of a plurality of object regions.

Subsequently, if a certain object region, which is included in the first thresholded image, is smaller than a critical size, then the certain object region is removed from the first thresholded image at step S820.

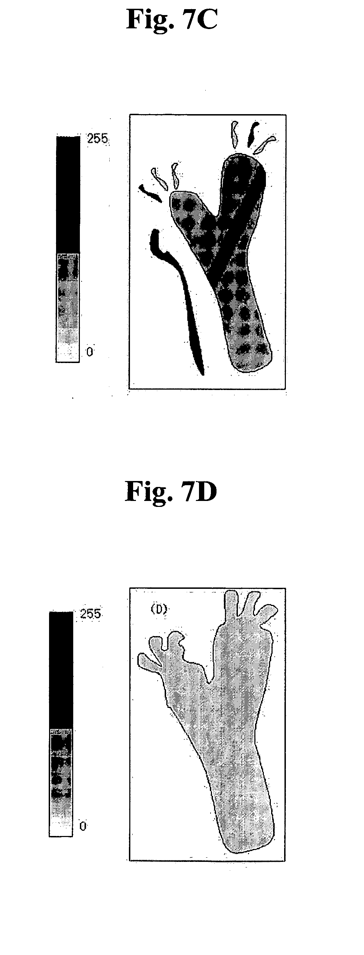

Thereafter, a second thresholding process of applying a second threshold value $TH_b$ is carried out for the ultrasound image shown in Fig. 7A at step 830, thereby obtaining a second thresholded image as shown in Fig. 7C. The second thresholded image may also include a plurality of object regions. The second thresholded image is compared with the first thresholded image in which the regions smaller than the critical size are removed. If a certain object region, which is included in the second thresholded image, does not include one of the object regions included in the first thresholded image, then the object region is removed from the second thresholded image. The remaining object regions are selected as a marker at step S840. The marker is the aggregation of voxels representing each object region, which is obtained through the above thresholding processes. It is preferable that the second threshold value $TH_b$ is smaller than the first threshold value $TH_a$.

Next, after determining a third threshold value $TH_n$, the marker is expanded to neighbored voxels having a pixel value greater than the third threshold value $TH_n$ by using the connectivity. This is so that the connection image is produced at step S850. The connection image of the object, which is formed through the above process, is shown in Fig. 7D. In the process of producing the connection image of the object, the disconnected object regions, which are considered as noises, are finally excluded from the connection image of the object. The third threshold value $TH_n$ may be determined through a specific histogram and is different from the first and second threshold values $TH_a$ and $TH_b$. It is preferable that the third threshold value $TH_n$, which is a value capable of clearly separating the noise from the blood vessel, is smaller than the second threshold value $TH_b$.

The marker may include a plurality of object regions. After expanding the object regions included in the marker, the resulting object regions are numbered in the order of sizes of the object regions. The largest object region may be only displayed and the number of the object regions to be displayed may be increased under the control of the operator. Thereafter, the gradients of the voxels in the connection image of the object are calculated and the structure matrix and the diffusion matrix are obtained.

As to the liver image, a size of the blood vessel region in the ultrasound image is generally smaller than a size of the noise region. Also, the voxels existing in the color Doppler data corresponding to the inside of the blood vessel as well as a surface of the blood vessel have a high brightness value. In the B-mode image, the intensity of voxels corresponding to the blood vessel is relatively low. As mentioned above, the connection image should be produced by using a different process from that of the kidney according to the blood vessel characteristics of the liver.

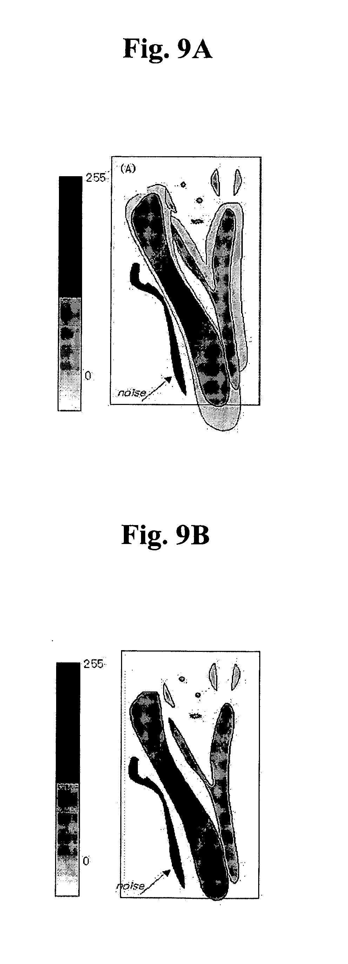

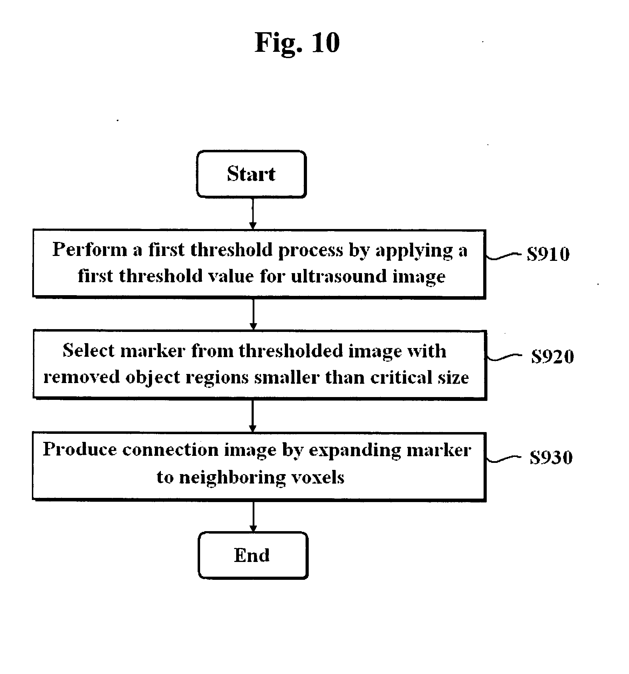

Hereinafter, a method of producing a connection image from the ultrasound image of liver will be described in detail in view of Figs. 9A and 10.

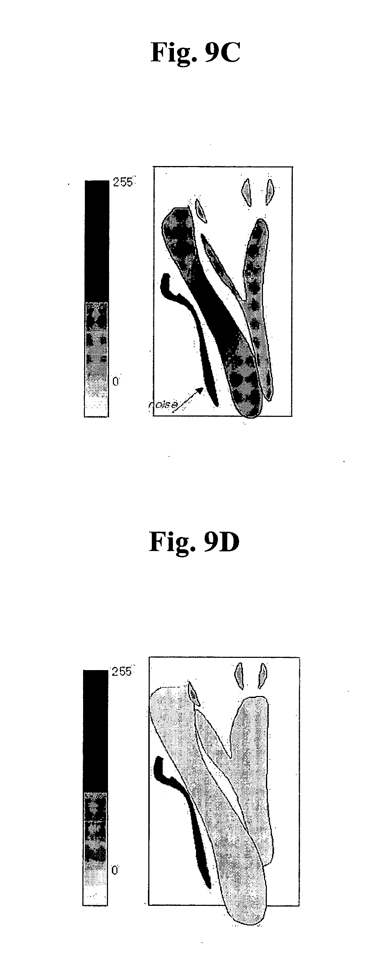

A first thersholding process applying a first threshold value $TH_a$ is carried out for an original ultrasound image of the liver shown in Fig. 9A. This is so that a first thresholded image is produced as shown in Fig. 9B at step S910. The first thresholded image consists of a plurality of object regions. Thereafter, if object regions included in the thresholded image are smaller than a critical size, then the object regions are removed from the first thresholded image as shown in Fig. 9C. Then, the remaining object regions are selected as a marker at step S920. The critical size is previously set by the operator.

Subsequently, the marker is expanded to voxels having a value greater than a second threshold value $TH_n$ so that a connection image is produced as shown in Fig. 9D. The marker may consist of a plurality of object regions. The number of voxels included in an object region is counted and the number of the voxels having a gray level, which is less than the second threshold value $TH_n$, in each object region of a B-mode image is counted. If a ratio of the number of voxels having the value less than the second threshold value $TH_n$ to the number of the voxels consisting of the object region, i.e., a percentage of the voxels having the value less than the second threshold value $TH_n$ in the object region is greater than a reference percentage, then the marker is expanded to the voxels having the value less than the second threshold value $TH_n$ so that the connection image is produced.

Thereafter, the gradients of the voxels consisting of the connection image of the object are calculated and the structure matrix and the diffusion matrix are obtained.

As mentioned above, the image processing of the 3D ultrasound Doppler image is carried out through using characteristics of the blood vessel to be observed. Thus, there are effects in which the widely distributed noise can be removed and the shape of the blood vessel can be clearly displayed in accordance with the present invention. Also, the present invention has effects in which an unnecessary noise is removed from the 3D ultrasound Doppler image by using a filtering method and the blood vessel is clearly displayed by simultaneously applying the smoothing and the sharpening through a thermal diffusion equation. The image in which the noise is removed can help to accurately diagnose the object.

While the present invention has been described and illustrated with respect to a preferred embodiment of the invention, it will be apparent to those skilled in the art that variations and modifications are possible without deviating from the broad principles and teachings of the present invention which should be limited solely by the scope of the claims appended hereto.

**Claims**

1. A method of processing an ultrasound image, comprising the steps of:

   a) recognizing a target object from an inputted ultrasound image based on an object recognition algorithm using connectivity of the target object;
   b) setting at least one object region by using the connectivity of the recognized target object;
   c) calculating a structure matrix by using voxel gradients of the object region;
   d) calculating a diffusion matrix from the structure matrix; and
   e) acquiring a processed ultrasound image by applying the diffusion matrix and the voxel gradients to the inputted ultrasound image.

2. The method as recited in Claim 1, wherein the step c) includes the steps of:

   c1) calculating the voxel gradients of the object region;
   c2) calculating the structure matrix at each voxel by using the voxel gradients; and
   c3) performing eigenvalue decomposition for the structure matrix.

3. The method as recited in Claim 2, wherein the voxel gradients are calculated by using the following equations:

$$I_x(x,y,z) = \frac{I(x+1,y,z) - I(x-1,y,z)}{2}$$

$$I_x(x,y,z) = \frac{I(x,y+1,z) - I(x,y-1,z)}{2}$$

$$I_x(x,y,z) = \frac{I(x,y,z+1) - I(x,y,z-1)}{2}$$

wherein $I_x$, $I_y$ and $I_z$ represent gradients of the x-axis, y-axis and z-axis directions at a voxel (x, y, z), respectively.

**4.** The method as recited in Claim 3, wherein the structure matrix is represented by the following equation:

$$\begin{pmatrix} I_x \\ I_y \\ I_z \end{pmatrix} \begin{pmatrix} I_x & I_y & I_z \end{pmatrix} = \begin{pmatrix} I_x^2 & I_x I_y & I_x I_z \\ I_x I_y & I_y^2 & I_y I_z \\ I_x I_z & I_y I_z & I_z^2 \end{pmatrix}$$

**5.** The method as recited in Claim 4, wherein the structure matrix performing the eigenvalue decomposition is represented by the following equation:

$$J(I) = \begin{pmatrix} \omega_1 & \omega_2 & \omega_3 \end{pmatrix} \begin{pmatrix} \mu_1 & 0 & 0 \\ 0 & \mu_2 & 0 \\ 0 & 0 & \mu_3 \end{pmatrix} \begin{pmatrix} \omega_1^T \\ \omega_2^T \\ \omega_3^T \end{pmatrix}$$

wherein eigenvectors ($\omega_1$ $\omega_2$ $\omega_3$) are vectors representing gradients, and wherein $\mu_1$, $\mu_2$ and $\mu_3$ represent the eigenvalues.

**6.** The method as recited in Claim 5, wherein the diffusion matrix is acquired by adjusting the eigenvalues to have a relationship of $\mu_1 \geq \mu_2 \geq \mu_3$.

**7.** The method as recited in Claim 6, wherein the diffusion matrix (D(I)) is represented by the following equation:

$$D(I) = \begin{pmatrix} \omega_1 & \omega_2 & \omega_3 \end{pmatrix} \begin{pmatrix} \lambda_1 & 0 & 0 \\ 0 & \lambda_2 & 0 \\ 0 & 0 & \lambda_3 \end{pmatrix}$$

wherein $\lambda_1 = \begin{cases} -\alpha, & if \quad \mu_1 \rangle s \\ \alpha & else \end{cases}$, $\lambda_2 = \begin{cases} -\alpha, & if \quad \mu_2 \rangle s \\ \alpha & else \end{cases}$ and $\lambda_3 = \begin{cases} -\alpha, & if \quad \mu_3 \rangle s \\ \alpha & else \end{cases}$.

**8.** The method as recited in Claim 7, wherein the processed ultrasound image is obtained by applying the diffusion matrix and the gradients to the inputted ultrasound image as the following equation:

$$It = I + \frac{\partial K_x}{\partial x} + \frac{\partial K_y}{\partial y} + \frac{\partial K_z}{\partial z}$$

wherein the equation $It = I + \dfrac{\partial K_x}{\partial x} + \dfrac{\partial K_y}{\partial y} + \dfrac{\partial K_z}{\partial z}$ is obtained by applying

$$\frac{\partial I}{\partial t} = div\left[ D \cdot \begin{pmatrix} I_x \\ I_y \\ I_z \end{pmatrix} \right] \quad \text{to} \quad \frac{\partial I}{\partial t} = div\begin{bmatrix} K_x \\ K_y \\ K_z \end{bmatrix}.$$

9. The method as recited in Claim 1, wherein when the target object of the inputted ultrasound image is recognized as a kidney at the step a), the step b) includes the steps of:

b11) performing a first thresholding process for the inputted ultrasound image by applying a first threshold value for producing a first thresholded image having at least one object region;
b12) removing object regions having a size smaller than a predetermined size from the first thresholded image;
b13) performing a second thresholding process for the inputted ultrasound image by applying a second threshold value smaller than the first threshold value for producing a second thresholded image;
b14) selecting a marker by comparing the first thresholded image with the second thresholded image;
b15) setting object regions by expanding the marker to voxels having a value greater than a third threshold value, which is smaller than the second threshold value; and
b16) ordering the object regions obtained at the step b15) in an order of sizes of the object regions.

10. The method as recited in Claim 1, wherein when the target object of the inputted ultrasound image is recognized as a liver at the step a), the step b) includes the steps of:

b21) performing a first thresholding process for the inputted ultrasound image by applying a first threshold value for producing a first thresholded image having at least one object region;
b22) removing object regions having a size smaller than a predetermined size from the first thresholded image;
b23) selecting the remaining object regions at step b22) as a marker;
b24) setting object regions by expanding the marker to voxels having a value greater than a second threshold value, which is smaller than the first threshold value; and
b25) ordering the object regions obtained at the step b24) in an order of sizes of the object regions.

# Fig. 1

# Fig. 2

```
              ┌──────────────┐
              │    Strart    │
              └──────┬───────┘
                     │
                     ▼
  ┌─────────────────────────────────────────┐
  │        Input ultrasound image           │ ── S100
  └────────────────────┬────────────────────┘
                       │
                       ▼
  ┌─────────────────────────────────────────┐
  │    Recognize target object through      │
  │         object recognition algorithm    │ ── S200
  └────────────────────┬────────────────────┘
                       │
                       ▼
  ┌─────────────────────────────────────────┐
  │     Set object region by using          │
  │     connectivity of the target object   │ ── S300
  └────────────────────┬────────────────────┘
                       │
                       ▼
  ┌─────────────────────────────────────────┐
  │    Calculate structure matrix by using  │
  │    voxel gradients of object region     │ ── S400
  └────────────────────┬────────────────────┘
                       │
                       ▼
  ┌─────────────────────────────────────────┐
  │ Calculate diffusion matrix from         │
  │          structure matrix               │ ── S500
  └────────────────────┬────────────────────┘
                       │
                       ▼
  ┌─────────────────────────────────────────┐
  │  Apply diffusion matrix to ultrasound   │
  │              image                      │ ── S600
  └────────────────────┬────────────────────┘
                       │
                       ▼
              ┌──────────────┐
              │     End      │
              └──────────────┘
```

# Fig. 3A

# Fig. 3B

# Fig. 4A

# Fig. 4B

# Fig. 5A

Structure matrix

# Fig. 5B

Diffusion matrix

# Fig. 6

# Fig. 7A

# Fig. 7B

# Fig. 7C

# Fig. 7D

# Fig. 8

```
┌──────────────┐
│    Start     │
└──────────────┘
        │
        ▼
┌────────────────────────────────────────────┐
│ Perform a first threshold process by        │── S810
│ applying a first threshold value for        │
│ ultrasound image                            │
└────────────────────────────────────────────┘
        │
        ▼
┌────────────────────────────────────────────┐
│ Remove object regions smaller than a        │── S820
│ critical size from first thresholded image  │
└────────────────────────────────────────────┘
        │
        ▼
┌────────────────────────────────────────────┐
│ Peform a second threshold process by        │── S830
│ applying a second threshold value for       │
│ ultrasound image                            │
└────────────────────────────────────────────┘
        │
        ▼
┌────────────────────────────────────────────┐
│ Select marker from second thresholded image │── S840
└────────────────────────────────────────────┘
        │
        ▼
┌────────────────────────────────────────────┐
│ Produce connection image by expanding       │── S850
│ marker to neighboring voxels                │
└────────────────────────────────────────────┘
        │
        ▼
┌──────────────┐
│     End      │
└──────────────┘
```

# Fig. 9A

# Fig. 9B

# Fig. 9C

# Fig. 9D

# Fig. 10

Start

Perform a first threshold process by applying a
first threshold value for ultrasound image — S910

Select marker from thresholded image with
removed object regions smaller than critical size — S920

Produce connection image by expanding marker
to neighboring voxels — S930

End

**European Patent Office**

**EUROPEAN SEARCH REPORT**

Application Number

EP 06 00 0879

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ABD-ELMONIEM K Z ET AL: "Real-time speckle reduction and coherence enhancement in ultrasound imaging via nonlinear anisotropic diffusion" IEEE TRANSACTIONS ON BIOMEDICAL ENGINEERING IEEE USA, vol. 49, no. 9, September 2002 (2002-09), pages 997-1014, XP007900061 ISSN: 0018-9294 * page 999, right-hand column, last paragraph - page 1000, left-hand column * * sec. IV-A, "Proposed model desciption" * * page 1000, right-hand column * ----- | 1-8 | INV. G06T5/00 |
| Y | JOACHIM WEICKERT: "Anisotropic Diffusion in Image Processing" [Online] 29 January 1996 (1996-01-29), DISSERTATION FACHBEREICH MATHEMATIK DER UNIVERSITÄT KAISERSLAUTERN , KAISERSLAUTERN, GERMANY , XP007900088 Retrieved from the Internet: URL:http://www.mia.uni-saarland.de/weickert/Papers/diss.ps.gz> [retrieved on 2006-03-02] sec. 1.2.3, "Anisotropic nonlinear models" sec. 1.2.4, "Generalizations - Higher dimensions" * page 16 - page 19 * * page 95 - page 113 * ----- | 1-8 | |

TECHNICAL FIELDS SEARCHED (IPC)

G06T

-/--

~~The present search report has been drawn up for all claims~~

| Place of search | Date of completion of the search | Examiner |
|---|---|---|
| Munich | 6 March 2006 | Werling, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 06 00 0879

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LEE C ET AL: "Unsupervised connectivity-based thresholding segmentation of midsagittal brain MR images" COMPUTERS IN BIOLOGY AND MEDICINE, NEW YORK, NY, US, vol. 28, no. 3, May 1998 (1998-05), pages 309-338, XP004532391 ISSN: 0010-4825 * abstract * | 1-8 | |

TECHNICAL FIELDS SEARCHED (IPC)

~~The present search report has been drawn up for all claims~~

| Place of search | Date of completion of the search | Examiner |
|---|---|---|
| Munich | 6 March 2006 | Werling, A |

EPO FORM 1503 03.82 (P04C01)

European Patent

Office

Application Number

EP 06 00 0879

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-8

**European Patent Office**

**LACK OF UNITY OF INVENTION
SHEET B**

Application Number

EP 06 00 0879

The Search Division considers that the present European patent application does not comply with the requirements of unity of invention and relates to several inventions or groups of inventions, namely:

1. claims: 1-8

    Enhancement of an ultrasound image using anisotropic diffusion filtering.
    ---

2. claims: 1,9-10

    Pre-segmentation of the ultrasound image in order to restrict subsequent processing to regions of interest.
    ---